# EUROPEAN PATENT APPLICATION

(11) **EP 1 895 274 A1**
(43) Date of publication of application: **05.03.2008**
(21) Application number: 07253401.9
(22) Date of filing: 29.08.2007
(51) Int. Cl.: G01C 21/36, B60Q 1/34

(54) **Automatic turn signalling device**

(30) Priority: 30.08.2006 US 468339
(71) Applicant: Agere Systems, Inc., Allentown, PA 18109 (US)
(72) Inventor: Landschaft, Assaf, 80801 Munich (DE); Mauguee, Laurent, 81541 Munich (DE)
(74) Representative: Williams, David John

(57) **Abstract**

Introduced is an automatic turn signaling device and method of using the same. In one embodiment the device provides for (1) a navigation module with a map information database for defining a route to a predetermined destination and determining a position of a vehicle; and (2) an associated control module for automatically activating the vehicle's turn signal based on its position.

## Description

### TECHNICAL FIELD OF THE INVENTION

The present invention is directed, in general, to a turn signaling device, more particularly, to a system integrated into a motor vehicle whereby a route is calculated and the system automatically activates turn signals over such route to navigate a user to a predetermined destination.

### BACKGROUND OF THE INVENTION

Systems for navigation and positioning that are based on the satellite based global positioning system (GPS) are well known. Well known prior art GPS systems used in automobiles for navigation typically include a map database with an integrated roadmap. Such systems typically locate the vehicle using GPS derived data and provide the driver with directions to a pre-selected destination. As the driver proceeds to the selected destination, the system typically gives acoustic or visual signals that will, if followed, guide him or her.

In one prior art system the driver, while navigating to the predetermined destination, will be notified when he or she is to make a turn from one road or street onto another by a voice cue. Other systems utilize acoustic signals such as a buzzer or other alerting device, while others rely on the visual or optical information displayed on an integrated display to provide directions to the driver. In many circumstances, however, a driver will miss information the provided by the navigation system. For example, if information is provided acoustically and the driver is operating in an environment where the noise level is high, he or she may miss the acoustic signal. Similarly, if information is being provided visually, and the driver has his or her attention diverted from the optical display because of traffic conditions, the driver may inadvertently miss a turn and deviate from the previously calculated route. If this happens, a new route would have to be recalculated, unless the driver elected stop and return to the previously calculated route.

Accordingly, what is needed in the art is a new and improved system that provides navigation or turn signal data to a user with the least amount of distraction from the task of operating the vehicle.

### SUMMARY OF THE INVENTION

To address the above-discussed deficiencies of the prior art, the present invention provides, in one aspect, an automatic turn signaling device and method of using the same. In one embodiment the device provides for (1) a navigation module to define a route to a predetermined destination based on data from a map information database, the navigation module determining a position of a vehicle relative to a turn on the route and transmitting the position to a control module; and (2) the control module activating a turn signal on the vehicle based on the position.

Thus the present invention provides a device for the enhancement of route navigation by providing guidance to the operator of the vehicle by way of an automatically controlled turn signaling device. The device enhances driver safety by serving as notification to a vehicle operator of forthcoming turns. The present device also enhances public safety by assuring that a driver does not forget to engage a turn signal to alert other drivers prior to making a turn. The device serves as a navigation aid by informing the driver of the turns that need to be made along a predetermined route in order to arrive at a predetermined destination.

In one embodiment of the invention, the device's navigation module determines the position of the vehicle relative to a turn on the route. In an embodiment of the invention, a type of turn is determined. In still another embodiment, the operational status of the turn signal is determined before being automatically activated. In order to prevent redundant signaling and to preserve a record of turns made, in another embodiment the automatic turn signaling device stores turn information after the turn signal is first activated.

To activate the automatic turn signaling device, one embodiment of the invention provides for the control module and turn signal to be connectable by a data bus. An embodiment provides for such data bus to be a CAN bus.

A useful embodiment of the invention provides for the automatic turn signaling device's navigation module to determine whether the vehicle is located within a predefined distance range from the turn. This is important with regard to when the turn signal should be activated. In this connection, another embodiment provides for the map information database to include a list of distance ranges associated with geographical regions and for the control module to select a distance range from the list based on the position of the vehicle. Because the speed of the vehicle is a factor in determining when a turn signal should be activated, still another embodiment of the invention provides for the automatic turn signaling device to have speed ranges associated with the list of distance ranges so that the control module can select a distance range from the list based on the speed of the vehicle.

Because most drivers want the ability to input information directly into a device such as an automatic turn signaling device, one embodiment provides for an automatic turn signaling device that can be activated by a user. Along the same line, another embodiment provides for the automatic turn signaling device to be deactivated by a user.

The present invention also provides several embodiments relating to the use of the device, which embodiments will be readily apparent to those skilled in the pertinent art from the information herein set forth. As herein set forth, the present invention also provides for a digital storage medium with electronically readable control instructions for controlling an automatic turn signaling device.

The foregoing has outlined preferred and alternative features of the present invention so that those skilled in the pertinent art may better understand the detailed description of the invention that follows. Additional features of the invention will be described hereinafter that form the subject of the claims of the invention. Those skilled in the pertinent art should appreciate that they can readily use the disclosed conception and specific embodiment as a basis for designing or modifying other structures for carrying out the same purposes of the present invention. Those skilled in the pertinent art should also realize that such equivalent constructions do not depart from the spirit and scope of the invention.

### BRIEF DESCRIPTION OF THE DRAWINGS

For a more complete understanding of the invention, reference is now made to the following descriptions taken in conjunction with the accompanying drawing, in which:
FIGURE 1 illustrates a method of using an automatic turn signaling device constructed in accordance with the present invention; and
FIGURE 2 illustrates a block diagram of an embodiment of an automatic turn signaling device.

### DETAILED DESCRIPTION

Before turning to the FIGURES and a detailed description of the present invention, certain additional factors should be considered. In general, the proposed invention describes a method that automatically controls a vehicle's turn signaling device. The invention provides for the device to define a route based on a map information database stored in or associated with a navigation module; determine the position of a vehicle; evaluate where the vehicle is located relative to a forthcoming turn along the route; generate an activation signal based on such evaluation; and activation of the vehicle's turn signal. The turn could be at a crossing, an intersection, a junction, an exit or any other point along the route where the use of a turn signal is either mandatory under local regulations or would be prudent considering local traffic conditions.

When the exterior turn signal is activated, the interior indicator will also be activated. This interior signal will serve to notify the driver of a forthcoming turn and the direction of the turn. The device will supplement any other optical and/or acoustic signal of a forthcoming turn furnished by an on-board navigation system or it can be used as the sole navigation system for a vehicle.

To define the route and determine the position of the vehicle on the route, a navigation module with a GPS receiver associated therewith is utilized. Because a vehicle is continuously changing position along a route, the determination of the vehicle position and evaluating whether the vehicle is located in the vicinity of an upcoming turn will be continuously updated, either at predefined time intervals or whenever a new vehicle position is provided by the GPS receiver.

It is anticipated that the system will generally generate and automatically provide the activation signal only once for each turn along the route. For this reason, the invention provides for the device to determine the operational status of the turn signal apparatus prior to transmitting an activation signal. This will permit the activation signal to be transmitted only when the vehicle turn signal is not already engaged. The determination of the operational status of the turn signal by sending a query is also advantageous in that it can be verified that an activation of the turn signal was successfully performed.

A useful embodiment of the invention provides for the storage of activation information for a given turn along the route. This assures that an activation signal for a given turn was transmitted and prevents repeated transmissions of an identical activation signal. Thus, in a situation where a driver decides not to make the recommended turn, the turn information is stored and not retransmitted when the driver manually overrides the system.

An embodiment of the invention provides that the activation can be transmitted via a data bus, in particular a CAN bus. This permits the ready employment of the invention because this type of data bus is typically already included in most automotive vehicles.

In order to determine whether the turn signal will be activated to indicate either a left or right turn, the navigation module furnishes information as to the type of forthcoming turn. When the present invention determines the vehicle location, it will also determine if the vehicle is located within a predefined distance range from the turn. This distance range can be a constant, such as between 50 meters and 100 meters from the turn, or it can be automatically selected from a stored list of ranges.

In one embodiment, the stored list of ranges will comprise distance ranges associated with geographical regions. These geographic regions can be different states or countries, with the ranges being those required or recommended by the respective state or country for activating a turn signal in advance of a turn. In such an embodiment, a matching will is performed between the position of the vehicle and a geographical region from the list.

In another embodiment, the stored list will be distance ranges associated with the vehicle speed, since at higher speeds the turn signal typically needs to be activated at a greater distance from the turn. In such an embodiment, the speed of the vehicle will be determined and matched with a speed range in the list. The invention can also include a combination and/or an extension of the described embodiments, such as a stored list in which each distance range is associated with several parameters.

Defining a distance range as having range boundaries of a first and second distance will be generally preferable, since a distance range will typically be that required by traffic regulations for activating a turn signal. Nevertheless, it also lies within the scope of the present invention for the distance range to be fixed predefined distance from the turn, thereby simplifying the evaluation, since only one distance has to be taken into account. This single distance value can also be selected from a stored list of values as described above for distance ranges.

The present invention also includes the activation of the automatic turn signaling system by a user. This permits a driver to use an interface integrated into or associated with the navigation system to determine whether the automatic turn signaling system is to activate a turn signal automatically or manually. Of course a driver is also enabled to turn off or cancel the automatic turn signaling device. The activation or deactivation of the automatic turn signaling device generally means the manual manipulation of a switch, button or similar means that turns the system on or off.

The invention also provides for an automatic turn signaling device. Such a device will generally provide for a system that has navigation module that can be used to define a route to a predetermined destination based on information derived from a map information database; determining the position of the vehicle relative to a turn on the route; and transmitting the position to a control module that activates a turn signal on a vehicle, which turn signal activation is based on the position of the vehicle. The navigation module will generally include or be associated with a GPS receiver that receives accurate position information from GPS satellites

To assure that a turn signal is activated only once for each turn along the route, as described above, the system is adapted to determine the operational status of the turn signal apparatus and to verify a correct activation of the turn signal. The device also provides for the storage of activation information for a given turn along the route.

As described above, the invention provides for the system to be connected to the turn signal via a data bus, in particular a CAN bus, thereby allowing for the easy upgrade of existing vehicles to the inventive automatic turn signaling device.

The automatic turn signaling device will provide for the determination of whether the vehicle is located within a predefined distance range from the upcoming turn. For this purpose the inventive system will include a stored list of distance ranges, which can be associated with geographical regions, from which a distance range selection can be made, based on the position of the vehicle. In one embodiment, the system is provided with a stored list of distance ranges associated with speed ranges, so that the control module can activate the turn signal based on the speed of the vehicle and a distance from a stored list that is dependent on the speed of the vehicle. In one embodiment of the invention, the distance range is user-selectable, so that the user can interface with the system and select boundaries of a distance range for activating the turn signal.

As described above, instead of a distance range, a single distance value can be utilized so that the turn signal is activated when the system determines that the vehicle is within that single predefined distance from the turn. The predefined distance value can also be from a stored list of values that is dependent on the location or on the speed of the vehicle.

A user interface also provide for a user-selectable feature, such as a configuration menu that defines whether the automatic turn signaling device is to be activated and whether it is to provide a turn signal automatically or manually. When the driver selects a "manual" configuration, the system will give the usual information to the driver that a turn is forthcoming, but the driver will be required to manually activate the turn signal. When the driver selects an "automatic" configuration, the turn signal will be operated automatically, as described above. The system is also adapted to allow for a manual cancellation of an automatic activation of the turn signal.

To provide for an easy implementation and/or specific adaptation of the invention, a digital storage medium is provided, which is comprised of electronically readable control instructions adapted, when inserted in an appropriate vehicle navigation system, to perform as described above. Of course any vehicle, particular an automotive vehicle, with a turn signal and an automatic turn signaling device of the type described herein will lie within the intended scope of the present invention.

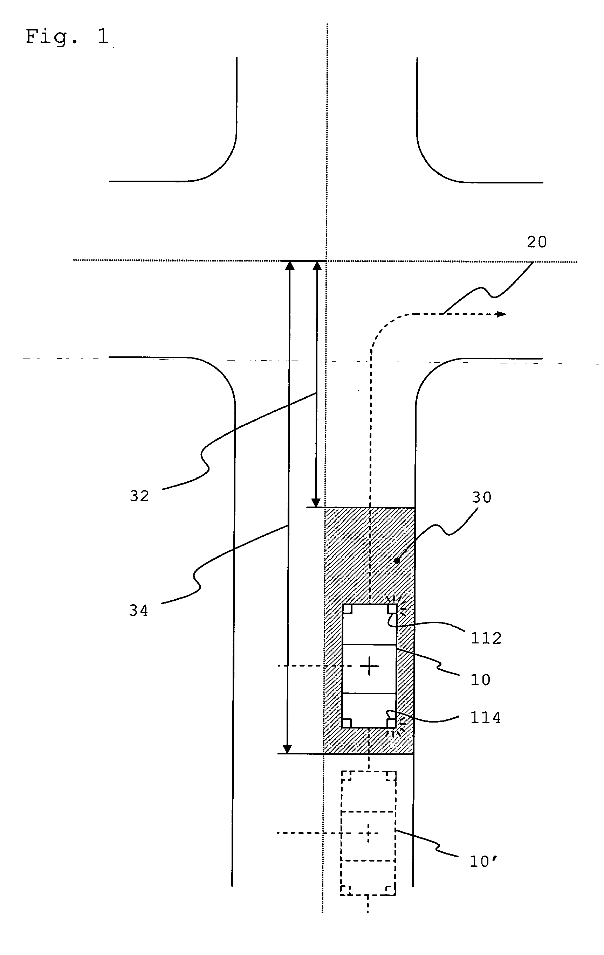

Referring initially to FIGURE 1, illustrated is a method of using an automatic turn signaling device constructed in accordance with the present invention. As a vehicle 10 travels along a route 20 to a predetermined destination, a map information database included in a navigation module determines that a street crossing is forthcoming, at which crossing the route 20 requires a right turn. In this embodiment the position of the vehicle 10 is determined at regular time intervals by means of a GPS receiver associated with the navigation module. A distance range 30 is defined by a first distance 32 and a second distance 34 from the forthcoming turn, wherein the values of the distances 32 and 34 can either be provided by user input prior to starting the trip or can be automatically selected from a stored list, which list can, for example, depend on state or country regulations or on vehicle speed. When the distances 32 and 34 and vehicle speed are used as parameters, the vehicle speed is determined at least two vehicle locations and the distance between the two locations is determined so that a time interval can be established.

While the vehicle 10' is located outside the predefined distance range 30 prior to the turn, no action is performed. When the position of the vehicle 10 is determined to be located within distance range 30, a signal is generated and transmitted to the vehicle's 10 turn signal together with information of the forthcoming right turn, in response to which front and rear right turn signals 112 and 114 on the vehicle are activated, together with corresponding interior signals (not shown). After the turn, the signals are cleared as normal. The driver of the vehicle 10 can also manually cancel the operation of the automatic turn signal device.

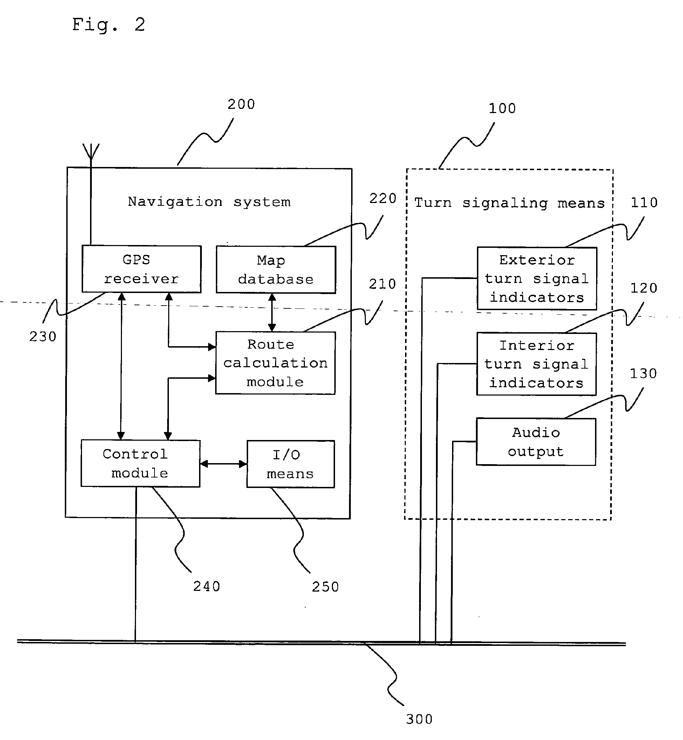

Turning now to FIGURE 2, illustrated is a block diagram of an embodiment of an automatic turn signaling device 200. In this embodiment, the automatic turn signaling device 200 is arranged in a vehicle 10 as shown in FIGURE 1. The device includes a navigation module 205 with a route calculator 210 function for defining a route to a predetermined destination using information from a map information database 220 and an associated GPS receiver 230. Information from the map information database 220 and the associated GPs receiver is also used to determine the position of the vehicle 10. This information is furnished to a control module 240 which causes the activation of a turn signal 100 in the vehicle 10.

The system 200 evaluates whether the vehicle 10 is located in the vicinity of an upcoming turn along a route 20 and, depending on the result of the evaluation, activates the turn signal 100. The turn signal 100, in this embodiment, includes typical exterior turn signal indicators 110, interior turn signal indicators 120 as well as an audio output 130, each of which will indicate a left or a right turn. The activation signal, transmitted via a CAN bus 300 connecting the automatic turn signaling device 200 and the turn signal 100, includes information for automatically activation that is dependent on the type of forthcoming turn.

The control module 240 can be adapted to cause the turn signal 100 to be activated based on whether the vehicle is located within a predefined distance range from the upcoming turn, which predefined distance range can be either defined by user input or from a stored list of distance ranges. For the purpose of an input of user-definable parameters and for an output of route guidance information, an input and output means 250 is provided.

In another embodiment of the invention, a stored list of ranges is provided that is associated with geographical regions or vehicle speeds, wherein the inventive device 200 is adapted to select a distance range from the stored list depending on the position and/or the speed of the vehicle 10.

Although the present invention has been described in detail, those skilled in the pertinent art should understand that they can make various changes, substitutions and alterations herein without departing from the spirit and scope of the invention in its broadest form.

## Claims

1. An automatic turn signaling device, comprising
a navigation module with a map information database for defining a route to a predetermined destination and determining a position of a vehicle; and
a control module associated with said navigation module for automatically activating said vehicle's turn signal based on said position.

2. The automatic turn signaling device as recited in Claim 1 wherein an operational status of said turn signal is determined before said turn signal is automatically activated.

3. The automatic turn signaling device as recited in Claim 1 wherein information regarding said turn is stored after said turn signal is activated.

4. The automatic turn signaling device as recited in Claim 1 wherein said navigation module determines whether said vehicle is located within a predefined distance range from said turn.

5. The automatic turn signaling device as recited in Claim 1 further comprising a map information database including a list of distance ranges associated with geographical regions wherein said control module selects a distance range from said list based on said position.

6. The automatic turn signaling device as recited in Claim 5 further comprising speed ranges associated with said list of distance ranges wherein said control module selects a distance range from said list based on a speed of said vehicle.

7. The automatic turn signaling device as recited in Claim 1 wherein said control module and said turn signal are connectable by a data bus.

8. The automatic turn signaling device as recited in Claim 1 wherein said navigation module determines said position relative to a turn on said route.

9. The automatic turn signaling device as recited in Claim 8 wherein said navigation module determines a type of said turn.

10. A method of using an automatic turn signaling device, comprising:
causing a navigation module to define a route to a predetermined destination based on data from a map information database, said navigation module determining a position of a vehicle relative to a turn on said route and transmitting said position to a control module; and
said control module activating a turn signal on said vehicle based on said position.
